# EUROPEAN PATENT SPECIFICATION

(11) **EP 2 845 481 B1**
(45) Date of publication and mention of the grant of the patent: **20.07.2016**
(21) Application number: 14183374.9
(22) Date of filing: 03.09.2014
(51) Int. Cl.: A01M 21/04, A62C 5/02, E01H 11/00

(54) **System for weed control**
Unkrautvernichtungssystem
Système pour détruire les mauvaises herbes

(30) Priority: 03.09.2013 SE 1351020
(43) Date of publication of application: 11.03.2015
(73) Proprietor: NCC Roads Holding AB, 170 80 Solna (SE)
(72) Inventor: Pedersen, Ivan, 170 80 Solna (SE)
(74) Representative: Brann AB

(56) References cited:
- EP-A1- 0 584 052
- EP-A1- 1 588 615
- DE-U1- 9 306 950
- DE-U1-202009 001 969
- GB-A- 2 485 460
- US-A- 5 575 111
- US-A1- 2005 005 509

## Description

### TECHNICAL FIELD

The disclosure relates to weed control. More particularly, the disclosure relates to a system for weed control and use of such a system.

### BACKGROUND

Weed control is sometimes required. Traditionally, weed control methods included mechanical measures, but evolved to also or almost only include use of pesticides instead of mechanical measures. Due to environmental concerns, the use of pesticides is becoming more and more questioned, because all, or at least some of the pesticides are hazardous also to the environment, for instance soil or useful plants, often both during treatment but also long time following treatment. In worst case, the environment may even be poisoned for a long time.
Because of that, pesticides are becoming more and more questioned for weed control and have to some extent even become forbidden to be used for weed control. Instead, other methods for weed control such as heat treatment including burning, typically using an open flame, of weed is used nowadays. But also heat treatment methods such as burning, for instance with propane burners, or steaming, suffer from disadvantages such as being expensive because of high fuel prices and also hazardous to the environment due to exhaust gases from the fuel used. Also problems with undesired fire of surroundings may arise because of the very hot heating treatment method using an open flame.

US-A1-2005/005509 discloses a system for weed-control of a surface, comprising a water container and a container for biodegradable foam extract, connected to a heater for heating a mixture of water and foam, for distributing the mixture of water and foam extract on a surface.

### SUMMARY

It is therefore an object to address some of the problems outlined above, and to provide a solution for weed control providing weed control without any need of pesticides or open flames. This object and others are achieved by the system for weed control according to the independent claims, and by the embodiments according to the dependent claims.

In accordance with a first embodiment, a system for weed control of a surface of treatment is provided. The system comprises a water container and a container for biodegradable foam extract. The containers are connected by means of first and second conduits, respectively, to a heater for heating a mixture of water and foam extract. The heater is connected to a first pump and further to at least a nozzle adapted to distribute the mixture of water and foam extract on the surface.
The second conduit comprises a pre-heater and a second pump. The pre-heater and the pumps (first and second) are adapted to be controlled by means of a user-interface such as a computer controlled monitor and control software for operation thereof and interaction with a user.

In this way, a precise control of temperature, pressure and amount of mixture is provided. This provides an optimized effect of weed control of the distributed mixture, which is a great advantage compared to non-computer controlled prior art apparatus.

According to an aspect of the present invention in accordance with the first embodiment, but also to other embodiments as follows below, a principle of treatment is distribution of hot, typically 95 to 98 degrees Celsius, water combined with simultaneously distribution of biodegradable organic foam on the surface of treatment. Typically, the foam disappears in a few minutes following distribution of the mixture of water and foam on the surface of treatment.

In accordance with a second embodiment, use of a system for weed control of a surface is provided. The system comprises a water container and a container for biodegradable foam extract. The containers are connected by means of first and second conduits, respectively, to a heater for heating a mixture of water and foam extract. The heater is connected to a first pump and further to at least a nozzle adapted to distribute the mixture of water and foam extract on the surface.
The second conduit comprises a pre-heater and a second pump. The pre-heater and the pumps (first and second) are adapted to be controlled by means of a user-interface such as a computer controlled monitor and control software for operation thereof and interaction with a user.

By means of the invention, according to all embodiments, a fast result is achieved since the heat causes cell-walls in the weeds to blow and the evaporation from the weeds is increased which causes drying-out of the weeds. Because of the precise control of temperature, pressure and amount of mixture, the weed-control is environmentally friendly (no over-dosage) and very efficient (long lasting treatment) in a way that has not been possible to achieve until know.

An advantage of all embodiments is that no pesticides at all are required to control the weed(s), providing environmentally friendly weed-control. A further advantage of different embodiments is that also they are also friendly to a user or other persons using or being influenced by the weed control, also following treatment since the foam is also not hazardous to humans or animals, not even the foam extract before mixing with the water.

Another advantage of all embodiments is that the effect of the treatment is long-lasting compared to known methods. This effect is achieved by means of the precise control of temperature, pressure and amount of mixture provided by the computer control.

Herein, the term "weed" includes plants commonly regarded as weed plants but also any other plant that is not desired. The term "control" means control but also more or less complete destruction of the plant.

Other objects, advantages and features of embodiments will be explained in the following detailed description when considered in conjunction with accompanying drawings and claims.

### BRIEF DESCRIPTION OF THE DRAWINGS

Figure 1 is a schematic illustration of a system for weed-control according to an embodiment of the invention;
Figure 2 is a detail-view of two nozzles for distribution in operation; and
Figure 3 is a view showing the nozzles and part of the system mounted to a vehicle, herein a truck.

### DETAILED DESCRIPTION

In the following, different aspects will be described in more detail with references to certain embodiments and to the accompanying drawings. For purposes of explanation and not limitation, specific details are set forth, including particular scenarios and techniques, in order to provide a thorough understanding of the different embodiments. However, other embodiments that depart from these specific details may also exist.

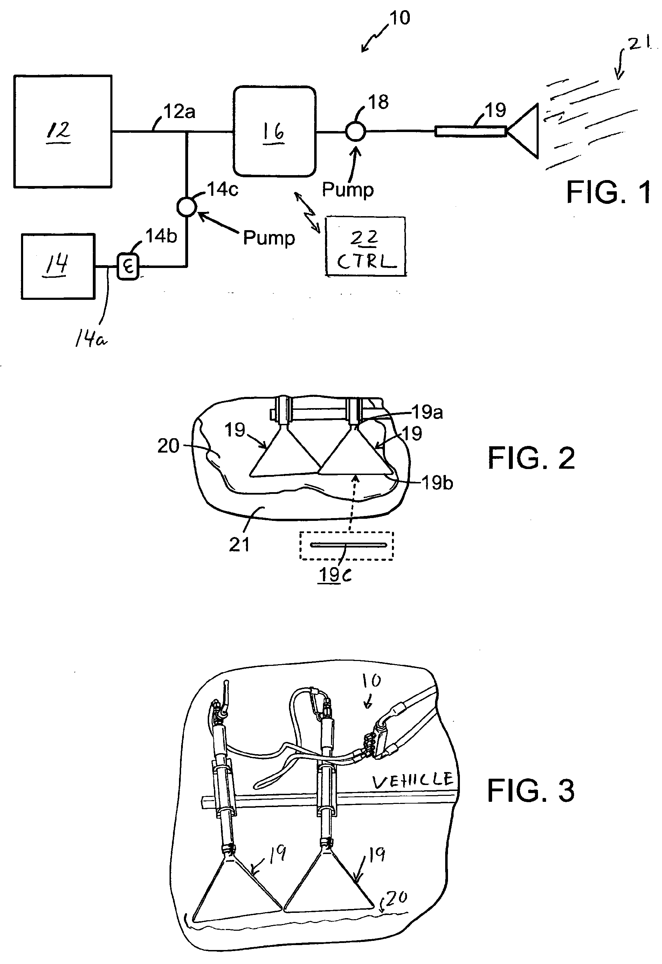

Embodiments are described in a non-limiting general context in relation to example scenarios and with a system for weed-control according to the one shown in Figure 1, where the system is shown and described schematically only not being mounted on a vehicle as typically in daily use. However, it should be noted that the embodiments may typically be mounted to a vehicle. Mounting to a vehicle is therefore explicitly shown in figure 3.

Figure 1 illustrates a system 10 for weed-control of a surface of treatment (schematically shown) according to an embodiment of the invention. The
system 10 comprises a water container 12 such as a water tank having a volume of a few hundred to a few thousand liters or any equivalent and a container 14 for biodegradable foam extract, typically having a smaller volume than the water container 12. Also multiple, or smaller or larger containers may be provided alternatively. The containers 12, 14 are connected by means of first 12a and second 14a conduits, respectively, to a heater 16, such as a boiler, for heating a mixture of water and foam. The mixture may be mixed in the heater 16, or before the heater 16 as shown in this figure, wherein the first 12a and second 14a conduits are joined together before entering the heater 16. Typically, the container with foam extract is connected directly to the heater 16, wherein foam extract and water are mixed in the heater, whereby a precise control of the mixture 20 (see Fig. 2) of water and foam can be achieved. The heater 16 is connected to a first pump 18, typically a high-pressure pump, and further to at least one nozzle 19 adapted to distribute the mixture 20 of water and foam on thesurface of treatment 21 forming a thermo-insulating layer (not shown) over the hot water onto the surface of treatment 21.

The foam is typically organic bio-degradable foam, in particular formed by hot water and an extract of corn and cocoa. The foam extract is used for forming a thermo-insulating layer over the hot water onto the surface of treatment. The foam per se is not active in contact with the plants (weed). The foam is typically bio-degraded in less than 24 hours following treatment, which has been proven during multiple tests and investigations.

The second conduit also comprises a pre-heater 14b and a second pump 14c. Typically, the pre-heater 14b is adapted to control a viscosity ε of the foam extract (not shown), and the second pump 14c is a dosage pump adapted for dosage of foam extract.

Typically, the pre-heater 14b is adapted to control a viscosity of the foam extract and the second pump 14c is a dosage pump adapted for dosage of foam extract. It is a great advantage to pre-heat the foam extract to be able to dosage the foam extract precise, such that a proper amount of foam can be provided.

The pre-heater 14b, and the pumps 14c, 18 are adapted to be controlled by means of a user interface 22 (shown schematically communicating with the rest of the system 10) such as a computer controlled monitor and control software for operation thereof and interaction with a user (an operator of the system). Typically the interface 22 is provided inside a vehicle and may communicate wirelessly or by wire with the system 10. Since the user interface is user-friendly it is possible also for less experienced operators to distribute the mixture very efficiently on the surface of treatment. This is a great advantage compared to prior art apparatus, which have no similar user interface and control.

In this way, a precise control of temperature, pressure and amount of mixture is provided. This provides an optimized effect of weed control of the distributed mixture.

Now is referred to Figure 2, which shows a detailed view of two nozzles for distribution in operation. Typically, the nozzle 19 is adapted such that, in use, a thermo-insulating layer of foam is provided onto a hot-water-layer on the surface of treatment 21. According to an embodiment, as shown in Figure 2, each nozzle 19 has an essentially triangular hollow shape with an inlet 19a at its tip and an outlet 19b at its base. Typically, the outlet 19b has an elongate (see inset figure) oval orifice 19c for discharging the mixture 20 of foam extract and water on surface of treatment 21.

An advantage of all embodiments is that no pesticides at all are required to control the weed(s), providing environmentally friendly weed-control, in particular due to the precise control requiring less foam. This implies huge environmental benefits compared to any known method used today according to our best knowledge. The distribution of hot, say 95-98 degree Celsius warm water combined with a simultaneous distribution of a bio-degradable, typically organic foam leaves no form of pollution or environmental stress to the surroundings.

Another advantage of all embodiments is that the effect of the treatment is long-lasting compared to known methods. This is because heat treatment with hot water and foam provides longer contact with a weed-plant and surrounds the whole weed-plant and also penetrates the weed-plant more, where it is possible, compared to known methods of weed-control.

Examples have shown that it is preferred to perform four treatments a first year and the years following two to three treatments. This is considerable less treatment than required by conventional methods such as burning. The system is effective to all types of weeds. The system also affects different types of weed seeds since these lose their ability to grow due to the heating with the mixture of hot water and foam. The effect of the treatment therefore lasts longer than treatments by means of conventional methods.

Figure 3 is a view showing the nozzles 19, 19 and part of the system 10 mounted to a vehicle, for instance a truck.

The above mentioned and described embodiments are only given as examples and should not be limiting. Other solutions, uses, objectives, and functions within the scope of the accompanying patent claims may be possible.

## Claims

1. A system (10) for weed control of a surface, comprising a water container (12) and a container (14) for biodegradable foam extract, which containers (12, 14) are connected by means of first (12a) and second (14a) conduits, respectively, to a heater (16) for heating a mixture (20) of water and foam extract, which heater (16) is connected to a first pump (18) and further to at least a nozzle (19) adapted to distribute the mixture of water and foam extract on the surface, **characterised in that** the second conduit (14a) comprises a pre-heater (14b) and a second pump (14c), wherein the pre-heater (14b), and the pumps (18, 14c) are adapted to be controlled by means of a user-interface (22) such as a computer controlled monitor and control software for operation thereof and interaction with a user.

2. The system (10) according to claim 1, wherein the at least one nozzle (19) has an essentially triangular hollow shape with an inlet (19a) at its tip and an outlet (19b) at its base, the outlet (19b) having an elongate oval orifice (19c) for discharging the mixture of foam and water.

3. The system according to claim 2, wherein the pre-heater (14b) is adapted to control a viscosity (e) of the foam extract.

4. The system according to claim 2 or 3, wherein the second pump (14c) is a dosage pump.

5. The system according to any one of the claims 1-4, wherein the first pump (18) is a high-pressure pump.

6. Use of a system for weed control of a surface, comprising a water container (12) and a container (14) for biodegradable foam extract, which containers (12, 14) are connected by means of first (12a) and second (14a) conduits, respectively, to a heater (16) for heating a mixture (20) of water and foam extract, which heater (16) is connected to a first pump (18) and further to at least a nozzle (19) adapted to distribute the mixture of water and foam extract on the surface, **characterised in that** the second conduit (14a) comprises a pre-heater (14b) and a second pump (14c), wherein the pre-heater (14b), and the pumps (18, 14c) are adapted to be controlled by means of a user-interface such as a computer controlled monitor and control software for operation thereof and interaction with a user.

## Patentansprüche

1. System (10) zur Unkrautbekämpfung einer Oberfläche, das einen Wasserbehälter (12) und einen Behälter (14) für einen biologisch abbaubaren Schaumextrakt umfasst, wobei die Behälter (12, 14) mittels einer ersten (12a) bzw. einer zweiten (14a) Leitung mit einer Heizvorrichtung (16) verbunden sind, um ein Mischung (20) aus Wasser und Schaumextrakt zu erwärmen, wobei die Heizvorrichtung (16) mit einer ersten Pumpe (18) und ferner mit mindestens einer Düse (19) verbunden ist, die dafür ausgelegt ist, um die Mischung aus Wasser und Schaumextrakt auf der Oberfläche zu verteilen, **dadurch gekennzeichnet, dass** die zweite Leitung (14a) einen Vorerhitzer (14b) und eine zweite Pumpe (14c) umfasst, wobei der Vorerhitzer (14b) und die Pumpen (18, 14c) dafür ausgelegt sind, um mittels einer Anwenderschnittstelle (22) wie z.B. ein computergesteuerter Monitor und mittels einer Steuersoftware zur Bedienung derselben und zur Interaktion mit einem Anwender gesteuert zu werden.

2. System (10) nach Anspruch 1, wobei die mindestens eine Düse (19) eine im Wesentlichen dreieckförmige hohle Form mit einem Einlass (19a) an ihrer Spitze und einem Auslass (19b) an ihrem Boden aufweist, wobei der Auslass (19b) eine langgestreckte ovale Öffnung (19c) zum Entleeren der Mischung aus Schaum und Wasser aufweist.

3. System nach Anspruch 2, wobei der Vorerhitzer (14b) dafür ausgelegt ist, um eine Viskosität (ε) des Schaumextrakts zu steuern.

4. System nach Anspruch 2 oder 3, wobei die zweite Pumpe (14c) eine Dosierpumpe ist.

5. System nach einem der Ansprüche 1 bis 4, wobei die erste Pumpe (18) eine Hochdruckpumpe ist.

6. Gebrauch eines Systems zur Unkrautbekämpfung einer Oberfläche, das einen Wasserbehälter (12) und einen Behälter (14) für einen biologisch abbaubaren Schaumextrakt umfasst, wobei die Behälter (12, 14) mittels einer ersten (12a) bzw. einer zweiten (14a) Leitung mit einer Heizvorrichtung (16) verbunden sind, um ein Mischung (20) aus Wasser und Schaumextrakt zu erwärmen, wobei die Heizvorrichtung (16) mit einer ersten Pumpe (18) und ferner mit mindestens einer Düse (19) verbunden ist, die dafür ausgelegt ist, um die Mischung aus Wasser und Schaumextrakt auf der Oberfläche zu verteilen, **dadurch gekennzeichnet, dass** die zweite Leitung (14a) einen Vorerhitzer (14b) und eine zweite Pumpe (14c) umfasst, wobei der Vorerhitzer (14b) und die Pumpen (18, 14c) dafür ausgelegt sind, um mittels einer Anwenderschnittstelle wie z.B. ein computergesteuerter Monitor und mittels einer Steuersoftware zur Bedienung derselben und zur Interaktion mit einem Anwender gesteuert zu werden.

## Revendications

1. Système (10) de lutte contre les mauvaises herbes d'une surface, comprenant un récipient d'eau (12) et un récipient (14) pour un extrait de mousse biodégradable, lesquels récipients (12, 14) sont respectivement reliés au moyen de premier (12a) et second (14a) conduits à un dispositif de chauffage (16) pour chauffer un mélange (20) d'eau et d'extrait de mousse, lequel dispositif de chauffage (16) est relié à une première pompe (18) et en outre à au moins une buse (19) conçue pour distribuer le mélange d'eau et d'extrait de mousse sur la surface, **caractérisé en ce que** le second conduit (14a) comprend un dispositif de préchauffage (14b) et une seconde pompe (14c), dans lesquels le dispositif de préchauffage (14b) et les pompes (18, 14c) sont conçus pour être commandés au moyen d'une interface utilisateur (22) tel qu'un dispositif de contrôle commandé par ordinateur et un logiciel de commande pour la mise en oeuvre de ce dernier et l'interaction avec un utilisateur.

2. Système (10) selon la revendication 1, dans lequel l'au moins une buse (19) a une forme creuse sensiblement triangulaire avec une entrée (19a) au niveau de son extrémité et une sortie (19b) au niveau de sa base, la sortie (19b) ayant un orifice ovale allongé (19c) pour décharger le mélange de mousse et d'eau.

3. Système selon la revendication 2, dans lequel le dispositif de préchauffage (14b) est conçu pour commander une viscosité (ε) de l'extrait de mousse.

4. Système selon la revendication 2 ou 3, dans lequel la seconde pompe (14c) est une pompe de dosage.

5. Système selon l'une quelconque des revendications 1 à 4, dans lequel la première pompe (18) est une pompe haute pression.

6. Utilisation d'un système de lutte contre les mauvaises herbes d'une surface, comprenant un récipient d'eau (12) et un récipient (14) pour un extrait de mousse biodégradable, lesquels récipients (12, 14) sont respectivement reliés au moyen de premier (12a) et second (14a) conduits à un dispositif de chauffage (16) pour chauffer un mélange (20) d'eau et d'extrait de mousse, lequel dispositif de chauffage (16) est relié à une première pompe (18) et en outre à au moins une buse (19) conçue pour distribuer le mélange d'eau et d'extrait de mousse sur la surface, **caractérisée en ce que** le second conduit (14a) comprend un dispositif de préchauffage (14b) et une seconde pompe (14c), dans lesquels le dispositif de préchauffage (14b) et les pompes (18, 14c) sont conçus pour être commandés au moyen d'une interface utilisateur comme un dispositif de contrôle commandé par ordinateur et un logiciel de commande pour la mise en oeuvre de ce dernier et l'interaction avec un utilisateur.
